Europäisches Patentamt

European Patent Office

Office européen des brevets

(11) Publication number: **0 305 595 B1**

# EUROPEAN PATENT SPECIFICATION

(45) Date of publication of patent specification: **30.10.91**

(51) Int. Cl.⁵: **F16H 61/10**

(21) Application number: **87117606.1**

(60) Publication number of the earlier application in accordance with Art.76 EPC: **0 103 751**

(22) Date of filing: **17.08.83**

(54) **Hydraulic control system for an automatic transmission.**

(30) Priority: **20.08.82 JP 143288/82**

(43) Date of publication of application:
**08.03.89 Bulletin 89/10**

(45) Publication of the grant of the patent:
**30.10.91 Bulletin 91/44**

(84) Designated Contracting States:
**DE FR GB**

(56) References cited:
**FR-A- 2 046 430**
**US-A- 3 656 373**
**US-A- 3 685 372**

(73) Proprietor: **NISSAN MOTOR CO., LTD.**
**No.2, Takara-cho, Kanagawa-ku**
**Yokohama City(JP)**

(72) Inventor: **Sugano,Kazuhiko**
**No. 3-4688-1 Sobudai**
**Zama City(JP)**

(74) Representative: **Patentanwälte Grünecker,**
**Kinkeldey, Stockmair & Partner**
**Maximilianstrasse 58**
**W-8000 München 22(DE)**

## Description

The present invention relates to a hydraulic control system for an automatic transmission according to the preamble part of claim 1.

A hydraulic control system according to the preamble part of claim 1 is known from FR-A-2046430.

The known control system, however, suffers from the drawback of a relatively complicated and space-consuming construction.

It is therefore an object underlying the present invention to provide a hydraulic control system according to the preamble part of claim 1, the hydraulic circuit of which is not complicated and is not remarkably space-consuming and the installation costs of which can be lowered.

The solution of this object is achieved by the features of claim 1.

## BRIEF DESCRIPTION OF THE DRAWINGS

Fig. 1 is a schematic view of a power transmission mechanism of a four speed automatic transmission as illustrated in connection with an engine which has throttle mounted in an intake passage and an accelerator pedal; and

Figs. 2(a), 2(b), 2(c) and 3, when combined, illustrate a circuit diagram of a preferred embodiment of a hydraulic control system for the automatic transmission according to the present invention.

## DETAILED DESCRIPTION OF THE INVENTION

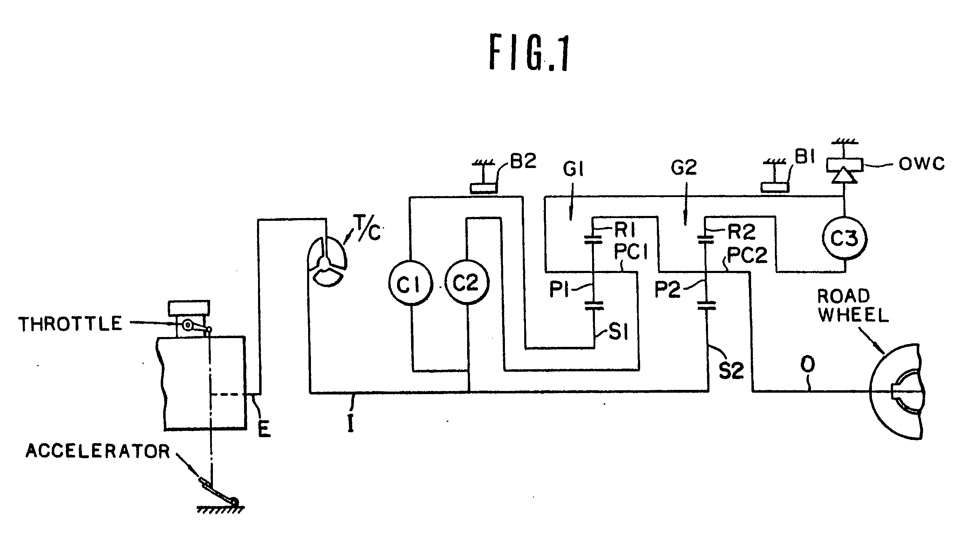

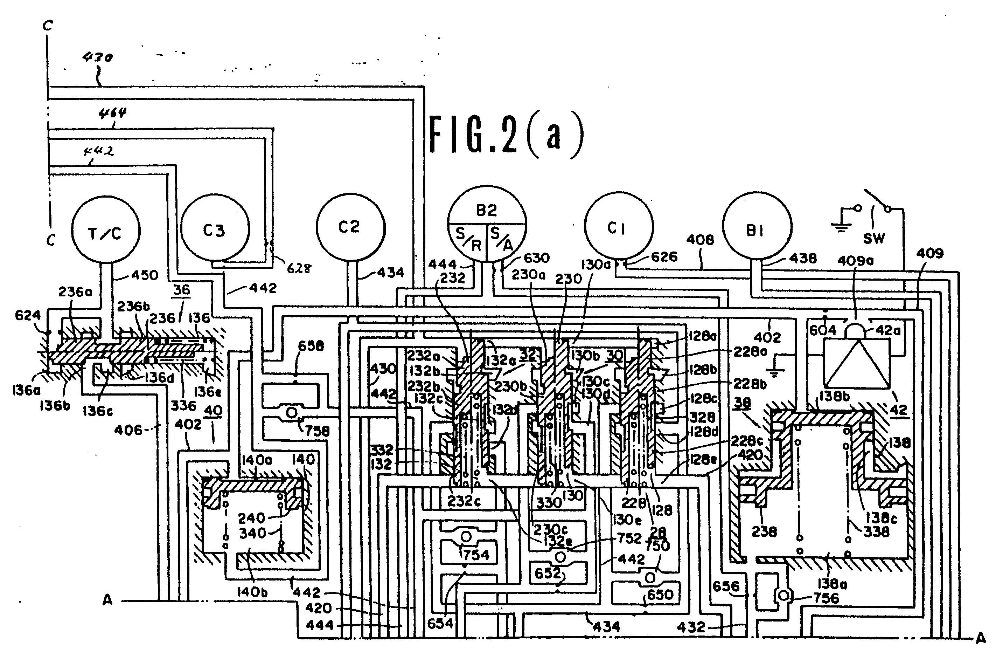

Referring to Fig. 1, there is illustrated a power transmission mechanism of a four forward speed and one reverse speed automatic transmission having an overdrive. This power transmission mechanism comprises an input shaft I operatively connected via a torque converter T/C to an engine output shaft E of an engine which has throttle which opens in degrees, an output shaft 0 operatively connected to road wheels, only one being shown, via a final drive, not shown. A first planetary gear set G1 and a second planetary gear set G2 are connected between the input and output shafts Iand O. A plurality of fluid operated friction units are provided which are made operative and inoperative for producing a plurality of speed ratios between the input shaft I and output shaft O. The fluid operated frictional units include a first clutch C1, a second clutch C2, a third clutch C3, a first brake B1, a second brake B2, and a one-way clutch OWC. The first planetary gear set G1 comprises a sun gear S1, an internal gear R1, a carrier PC1 carrying pinion gears P1 meshing simultaneously both the gears S1 and R1. The planetary gear set G2 comprises a sun gear S2, an internal gear R2 and a carrier PC2 carrying pinion gears P2 meshing simultaneously both gears S2 and R2. The carrier PC1 is connectable via the clutch C1 with the input shaft I, and the sun gear S1 is connectable via the clutch C2 with the input shaft I. The carrier PC1 is connectable via the clutch C3 with the internal gear R2. The sun gear S2 is constantly connected with the input shaft I. The internal gear R1 and carrier PC2 are constantly connected with the output shaft O. The brake B1 is arranged to anchor the carrier PC1. The brake B2 is arranged to anchor the sun gear S1. The one-way clutch OWC is so constructed that it allows forward rotation (i.e., the same rotation as that of the engine output shaft E), but prevents reverse rotation (i.e., the rotation opposite to the forward rotation). Thus, it acts as a brake only during reverse rotation.

In the above mentioned power transmission mechanism, the rotational state of each of the rotary elements (S1, S2, R1, R2, PC1, and PC2) of the planetary gear sets G1 and G2 can be varied by actuating selected one or combination of the cluthes C1, C2 and C3, brake B1 (one-way clutch OWC) and brake B2, thus varying the revolution speed of the output shaft O relative to that of the input shaft I. The four forward speed ratios and one reverse speed ratio are produced if the clutches C1, C2 and C3 and brakes B1 and B2 are engaged in the manner as shown in the following Table.

## Table

| | C1 | C2 | C3 | B1 (DWC) | B2 | Gear Ratio | $\alpha 1 = 0.45$ $\alpha 2 = 0.45$ |
|---|---|---|---|---|---|---|---|
| 1st speed | | | o | o | | $\dfrac{1 + \alpha 2}{\alpha 2}$ | 3.22 |
| 2nd speed | | | o | | o | $\dfrac{\alpha 1 + \alpha 2}{\alpha 2(1 + \alpha 1)}$ | 1.38 |
| 3rd speed | | o | o | | | 1 | 1 |
| 4th speed | | o | | | o | $\dfrac{1}{1 + \alpha 1}$ | 0.69 |
| Reverse | o | | | o | | $-\dfrac{1}{\alpha 1}$ | -2.22 |

In the above Table, a sign "o" denotes actuation state of the clutch or brake, $\alpha 1$ and $\alpha 2$ respectively denote ratios of number of teeth of the internal gears R1 and R2 to number of teeth of the corresponding sun gears S1 and S2. A gear ratio is a ratio of the revolution number of the output shaft I to that of the output shaft O. What is denoted by the label (OWC) below the brake B1 means that the first speed ratio is produced owing to the action of the one-way clutch OWC even if the brake B1 is not applied. However, in this first speed ratio, it is not possible for the output shaft O to drive the engine (that is, no engine braking is effected).

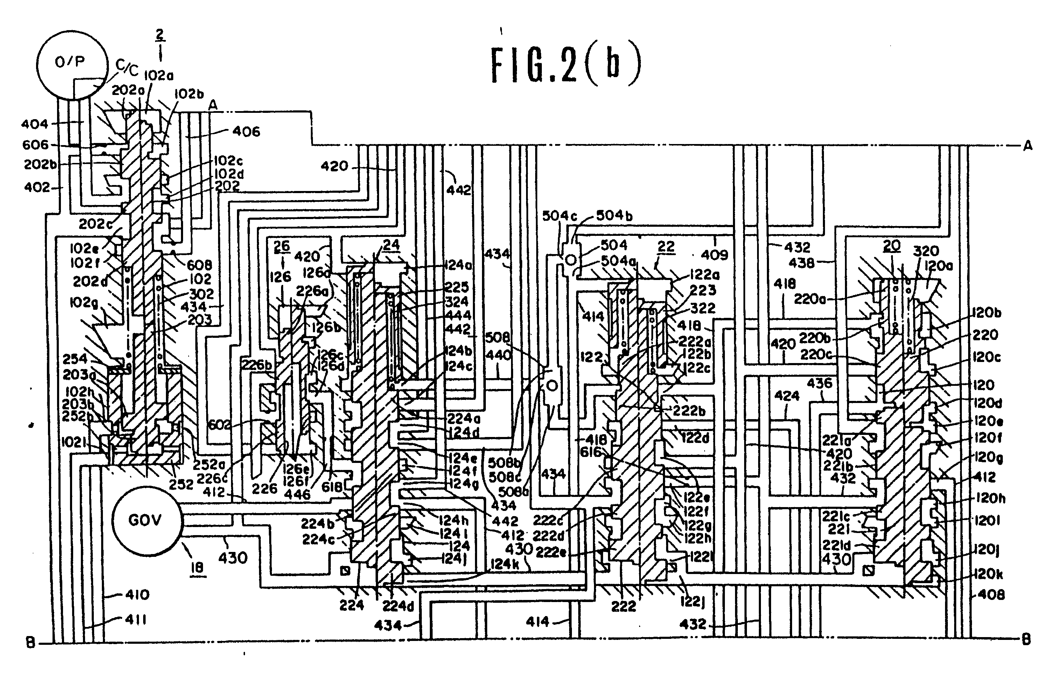

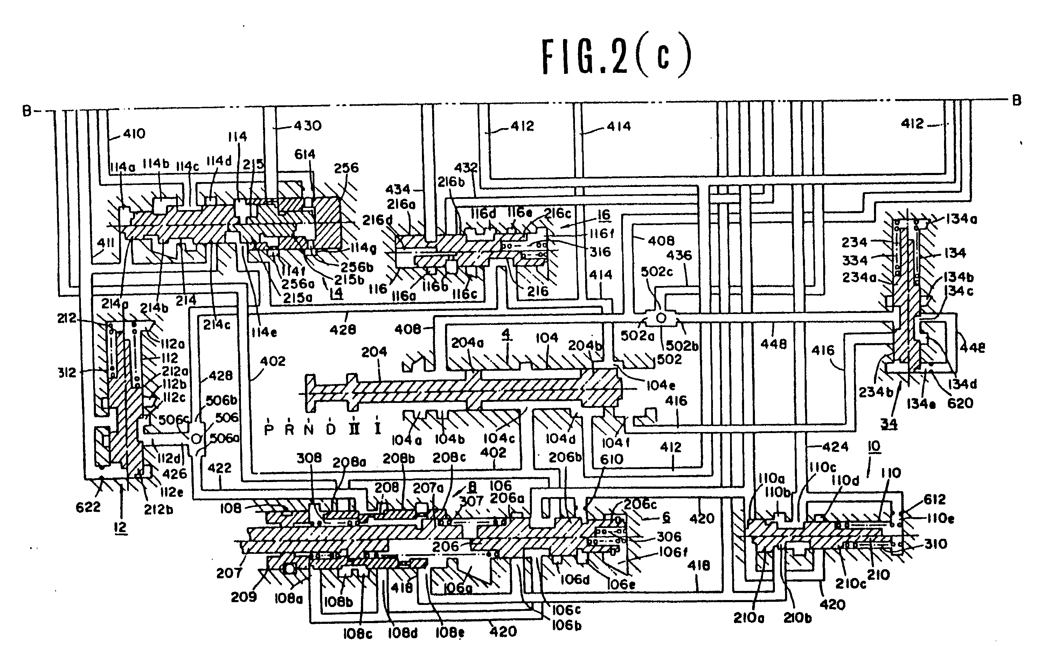

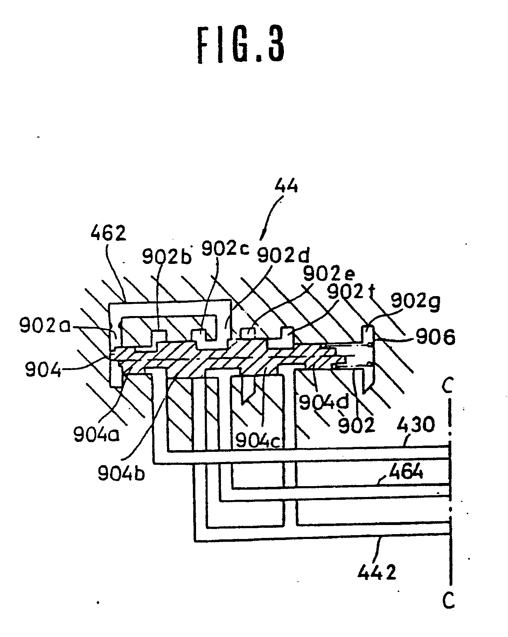

Referring to Figs. 2(a), 2(b), 2(c), and 3, a hydraulic control system for the above power transmission mechanism is described.

This hydraulic control system comprises a regulator valve 2, a manual valve 4, a throttle valve 6, a throttle fail safe valve 8, a throttle modulator valve 10, a pressure modifier valve 12, a cut back valve 14, a line pressure booster valve 16, a governor valve 18, a 1-2 shift valve 20, a 2-3 shift valve 22, a 3-4 shift valve 24, a 2-4 timing valve 26, a 2-3 timing valve 28, a 3-4 timing valve 30, a 3-2 timing valve 32, a first manual range pressure reducing valve 34, a torque converter pressure reducing valve 36, a 1-2 accumulator 38, a 4-3 accumulator 40, an overdrive inhibitor solenoid 42, and a centrifugal force offset valve 44 (see Fig. 3). These valves are interconnected as shown in Figs. 2(a), 2(b), 2(c), and 3, and connected with an oil pump O/P, the torque converter T/C, clutches C1, C2 and brakes B1 and B2 as shown. The brake B2 has a servo apply chamber S/A, i.e., a fluid pressure chamber designed to apply the brake when pressurized, and a servo release chamber S/R, i.e., a fluid pressure chamber designed to release the brake when pressurized. Since the servo release chamber S/R has a larger pressure acting area than a pressure acting area of the servo apply chamber S/A, the brake B2 is released when the pressure is supplied to the servo release chamber S/R irrespective of the supply of fluid pressure to the servo apply chamber S/A. The overdrive inhibitor solenoid 42 is electrically connected with an overdrive inhibitor switch SW.

A portion shown in Figs. 2(a), 2(b) and 2(c) of the hydraulic control is described in co-pending U.S. application Ser. No. Unknown (attorney's Case No. 83SUG389RLS/ISP), filed July 29, 1983 (see FIG. 2(a), 2(b) and 2(c)) and commonly assigned herewith, the disclosure of which application is hereby incorporated by reference in its entirety. Alternatively, it is described in co-pending European application Ser. No. Unknown (Representative's Ref.: EP 1193-30/dg), filed July 29, 1983 by the same applicant of the present application, the disclosure of which application is hereby incorporated by reference in its entirety.

The names of parts denoted by the reference numerals in Figs. 2(a), 2(b) and 2(c) are hereinafter listed. The reference numerals 102, 104, 106, 108, 110, 112, 114, 116, 120, 122, 124, 126, 128, 130, 132, 1334 and 136 denote valve bores, the reference numerals 102a~j, 104a~f, 106a~f, 108a~e, 110a~e, 112a~e,

3

114a~g, 116a~f, 120a~k, 122a~j, 124a~k, 126a~e, 130a~e, 132a~e, and 136a~e ports, the reference numerals 138 and 140 cylinder bores, the reference numerals 202, 203, 204, 206, 210, 212, 214, 215, 216, 220, 221, 222, 224, 226, 228, 230, 232, 234, and 236 spools, the reference numerals 202a~d, 203a~b, 204a~b, 206a~c, 208a, 210a~c, 212a~b, 214a~c, 215a~b, 216a~c, 220a~c, 221a~d, 222a~e, 224a~d, 226a~c, 228a~c, 230a~c, 232a~c, 234a~b, and 236a~b lands, the reference numeral 207 plunger, the reference numeral 208 sleeve, the reference numeral 209 plug, the reference numerals 223 and 225 plugs, the reference numeral 238 and 240 pistons, the reference numeral 252 sleeve, the reference numeral 252a~c ports, the reference numeral 254 spring seat, the reference numerals 302, 306, 307, 308, 310, 312, 316, 320, 322, 324, 328, 330, 332, 334, 336, 338, and 340 springs, the reference numerals 402, 404, 406, 408, 409, 410, 411, 412, 414, 416, 418, 420, 422, 424, 426, 428, 430, 432, 434, 436, 438, 440, 442, 444, 446, 448 and 450 oil conduits, the reference numerals 502, 504, 506 and 508 shuttle valves, the reference numerals 602, 604, 606, 608, 610, 612, 614, 616, 618, 620, 622, 624, 626, 628, 630, 650, 652, 654, 656 and 658 orificies, and the reference numerals 750, 752, 754, 756 and 758 check valves.

Referring to Fig. 3, the centrifugal force offset valve 44 embodying the present invention comprises a valve bore 902 having five ports 902a to 902g, a valve member in the form of a spool 904 having four lands 904a to 904d (the lands 904b and 904c are of the same diameter and the lands 904a and 904d are of smaller diameter than the former two), and a spring 906 biasing the spool 904 to the left as viewed in Fig. 3. The ports 902a and 902d communicate with each other by a fluid conduit 462, and the port 902d communicates with the clutch C3 via a fluid conduit 464. The port 902b communicates with a fluid conduit 430 which defines a part of a governor pressure circuit. The port 902c and port 902f communicate with a fluid conduit 442. This fluid conduit 442 communicates with the 3-4 shift valve 24 and is always supplied with fluid pressure to establish first, second and third speed ratios. The ports 902e and 902g are drain ports, respectively.

The operation is described hereinafter.

As apparent from the preceding Table, the clutch C2 and brake B2 are actuated in the fourth speed ratio. Under this condition, the clutch drum of the clutch C3 rotates at high speeds and is subject to a centrifugal force which is proportional to the square of the rotational speed of the clutch drum. When, under this condition, the 3-4 shift valve 24 (see Fig. 2(b)) shifts from an upshift position thereof, as illustrated by the left half thereof in Fig. 2(b), to a downshift position thereof, as illustrated by the right half thereof in Fig. 2(b), the fluid pressure (line pressure) is supplied to the fluid conduit 442. When the fluid pressure is supplied to the fluid conduit 442, the spool 904 of the centrifugal force offset valve 44 assumes a state indicated by the bottom half thereof in Fig. 3 wherein pressure regulation is effected by using the line pressure in the port 902c as a source of fluid pressure and the port 902e as a drain port. When the spool 904 assumes this state, the fluid pressure Pr in the ports 902a and 902d is regulated to such a value that the sum of a rightwardly directed force, viewing in Fig. 3, due to the fluid pressure (Pr) in the port 902a and a rightwardly directed force, as viewed in Fig. 3, due to the fluid pressure (governor pressure PG) in the port 902a balances with the sum of a leftwardly directed force, as viewed in Fig. 3, due to the fluid pressure (line pressure PL) in the port 902f and a leftwardly directed force, as viewed in Fig. 3, due to the spring 906. The above mentioned fluid pressure Pr is determined by the following equation.

Assuming that the area of the land 904a is S1, a differential area between the lands 904a and 904b is S2, a differential area between the lands 904c and 904d is S3 (S3 = S1), and a force of the spring 906 is f, then

$$Pr \bullet S1 + PG \bullet S2 = PL \bullet S3 + f$$
$$Pr = (S3/S1) \bullet PL - (S2/S1) \bullet PG + f/S1.$$

Since S3 = S1,

$$Pr = PL - (S2/S1) \bullet PG + f/S1.$$

Since the force f of the spring 906 is set very small, then

$$Pr = PL - (S2/S1) \bullet PG.$$

As will be apparent from the above equation, the fluid pressure Pr decreases as the governor pressure PG increases. The governor pressure is proportional to the square of the rotational speed of the output shaft 0 and the rotational speed of the output shaft 0 is proportional to the rotational speed of the clutch drum of the clutch C3. Thus, the fluid pressure Pr decreases as a function of the square of the rotational speed of the clutch drum. Since the fluid pressure created within the clutch drum by the centrifugal force is proportional to the square of the rotational speed of the clutch drum, the above mentioned fluid pressure Pr decreases as the centrifugal force increases. By setting the areas S1 and S2 to appropriate values, it is possible to let a decrease in the fluid pressure Pr due to the rotation of the clutch drum equal to an increase in fluid pressure within the clutch drum due to the centrifugal force. This means that the fluid pressure for actuating the clutch C3 can be kept substantially unaffected by the centrifugal force irrespective of the variation in rotational speed of the clutch drum. Therefore, even at high vehicle speeds, substantial shocks in effecting 4-3 downshifting are avoided. Similarly, substantial shocks in effecting 4-2 downshifting and 4-1 downshifting are avoided.

Since substantially no governor pressure is available when the vehicle moves off from the standstill, line presure which is not reduced acts on the clutch C3, thus securing sufficiently large capacity of the clutch.

Although in the above described embodiment, the present invention has been applied to the four speed automatic transmission, the present invention may be applied to any asutomatic transmission as long as it has a clutch which is engageable when its clutch drum is rotating.

From the preceding description, it will be appreciated that substantial shocks in effecting downshifting from the fourth speed ratio to any one of the third, second and first speed ratios are avoided.

## Claims

1. A hydraulic control system for an automatic transmission for a motor vehicle having an engine including a throttle which opens in degrees, the transmission being shiftable between a plurality of forward speed ratios, the hydraulic control system comprising:

   a source of fluid pressure (2);

   means communicating with said source of fluid pressure for producing a govenor fluid pressure variable with the vehicle speed;

   means communicating with said source of fluid pressure variable with the degree of throttle opening;

   means for producing a downshift hold signal fluid pressure;

   a shift valve (24) including means for defining a valve bore, a spool (224) slidably disposed in said valve bore for movement between a downshift position and an upshift position and having at least one pressure acting area which is exposed to said govenor fluid pressure, a plug (225) having a pressure acting area which is exposed to said throttle fluid pressure, and a spring (324) disposed between said spool (224) and said plug (225) and acting therebetween, said govenor pressure acting area, when acted upon by said govenor pressure urging said spool (224) to move from said downshift position thereof to said upshift position thereof against said spring, said throttle pressure acting area, when acted upon by said throttle fluid pressure, urging said plug to move said spool (224) from said upshift position thereof to the downshift position thereof;

   said spool (224) having a first signal pressure acting area and said plug (225) having a second signal pressure acting area;

   said valve bore defining means is formed with a first group of ports comprising first (124c), second (124d), and third (124e) ports, and also with a second group of ports comprising fourth (124f), a fifth (124g), and sixth (124h) ports, said spool (224) is formed with axially spaced first (224a), second (224b), and third (224c) control lands cooperating with said first group of ports (124c, 124d, 124e) to connect said second port (124d) selectively to said first or third port (124c, 124e), said second and third control lands (224b, 224c) cooperating with said second group of ports (124f, 124g, 124h) to connect said fifth port (124g) selectively to said fourth or sixth port (124f, 124h), said valve bore defining means being formed with a bias port (124b) opening into said valve bore, said bias port providing communication between said downshift hold signal signal fluid pressure producing means (8) and said first and second signal pressure acting area so as to allow said downshift position hold signal fluid pressure (kickdown pressure in line 418) to act upon said first and second signal pressure acting areas, said first signal pressure acting area, when acted upon by said downshift position hold signal fluid pressure, urging said spool to move from said upshift position thereof to the downshift position thereof, said second signal pressure acting area, when acted upon by said downshift position hold signal fluid pressure, urging said plug to move away from said spool.

   **CHARACTERISED IN THAT**

   when said spool (224) assumes said downshift position, said first control land (224a) closes said first port (124c) and said second control land (224b) closes said fourth port (124f) and said first and second control lands (224a, 224b) cooperate with each other to allow fluid communication between said second and third ports (124d, 124e), and said third control land (224c) cooperates with said second control land (224b) to allow fluid communication between said fifth and sixth ports (124g, 124h), whereas

when said spool (224) assumes said upshift position thereof, said second control land (224b) closes said third port (124e) and cooperates with said first control land (224a) to allow fluid communication between said second and first ports (124d, 124c), and said third control land (224c) closes said sixth port (124h) and cooperates with said second control land (224b) to allow fluid communication between said fourth and fifth ports (124f, 124g), said first port (124c) communicating with said fourth port (124f) via a conduit (442) so that said second port (124d) is allowed to communicate with said fourth port (124f) via said first port (124c), said conduit (442) and said fifth port (124g) with said fourth port (124d), and in that the plug (225) includes a central bore within which the spring (324) and one end of the spool (224) are located.

## Revendications

1. Dispositif de commande hydraulique pour transmission automatique de véhicule à moteur ayant un moteur comportant une vanne papillon qui s'ouvre par degrés, la transmission étant déplaçable entre une pluralité de rapports de vitesse vers l'avant, le dispositif de commande hydraulique comprenant :
   une source de fluide pressurisé (2);
   des moyens de communication avec cette source de fluide pressurisé pour produire une pression de fluide gouvernant changeant avec la vitesse du véhicule;
   des moyens communiquant avec la source de fluide pressurisé variant avec le degré d'ouverture du papillon;
   des moyens pour produire un signal de maintien de rétrogradage du fluide pressurisé;
   une soupape de changement (24) comportant des moyens pour définir un orifice de soupape, une bobine (224) disposée de façon coulissante à l'intérieur de l'orifice de soupape pour se déplacer entre une position de rétrogradage et une position de changement de vitesse à la volée et ayant au moins une aire d'action de pression qui est exposée à la pression de fluide de gouvernage, un plot (225) ayant une aire d'action de la pression qui est exposée à la pression de fluide de papillon et un ressort (324) disposé entre ladite bobine (224) et ledit plot (225) et agissant entre ceux-ci, l'aire d'action de la pression de gouvernage, lorsqu'elle est actionnée par la pression de gouvernage sollicitant la bobine (224) de manière à déplacer celle-ci depuis sa position de rétrogradage vers sa position de changement à la volée à l'encontre du ressort, cette aire d'action de la pression de papillon, lorsqu'elle est actionnée par la pression de fluide de papillon, sollicitant le plot pour déplacer la bobine (224) depuis sa position de changement à la volée vers la position de rétrogradage de celle-ci;
   la bobine (224) ayant une première aire d'action de pression de signal et le plot (225) ayant une seconde aire d'action de la pression de signal;
   ledit moyen définissant un orifice de soupape étant formé avec un premier groupe de lumières comprenant une première (124c) une seconde (124d), et une troisième (124e) lumières, ainsi qu'un second groupe de lumières comprenant une quatrième (124f), une cinquième (124g) et une sixième (124h) lumières, la bobine (224) étant formée avec un premier (224a), un second (224b), et un troisième (224c) espaces de commande espacés axialement et coopérant avec le premier groupe de lumières (124c, 124d, 124e) afin de connecter la seconde lumière (124d) sélectivement à l'une des première ou troisième lumière (124c, 124e), les second et troisième espaces de commande (124b, 124c) coopérant avec le second groupe de lumières (124f, 124g, 124h) afin de connecter la cinquième lumière (124g) sélectivement à la quatrième ou à la sixième lumière (124f, 124h), le moyen définissant un perçage de soupape étant formé avec une lumière de sollicitation (124h) débouchant à l'intérieur du perçage de soupape, cette lumière de sollicitation permettant la communication entre le moyen de production de la pression de fluide de signal du signal de maintien de rétrogradage (8) et les première et seconde aires d'action de pression de signal afin de permettre à la pression de fluide du signal de maintien de position de rétrogradage (pression de rétrogradage en ligne rapide 418) d'agir sur les première et seconde aires d'action de pression de signal, ladite première aire d'action de signal de pression, lorsqu'on agit dessus par la pression de fluide de signal de maintien de position de rétrogradage, sollicitant la bobine pour déplacer celle-ci depuis la position de changement à la volée de celle-ci vers la position de rétrogradage de celle-ci, la seconde aire d'action de la pression de signal sollicitant le plot à se déplacer à distance de la bobine lorsqu'on agit dessus sous l'effet de la pression de fluide du signal de maintien de position de rétrogradage,

caractérisé en ce que ladite bobine (224) comprend ladite position de rétrogradage, le premier espace de commande (224a) fermant la première lumière (124c) et le second espace de commande (224b) fermant la quatrième lumière (124f) et les premier et second espaces de commande (224a, 224b) coopérant l'un avec l'autre pour permettre une communication de fluide entre les seconde et troisième lumières (124d, 124e) et le troisième espace de commande (124c) coopérant avec le second espace de commande (224b) pour permettre une communication de fluide entre les cinquième et sixième lumières (124g, 124h), alors que quand la bobine (224) est en position de changement à la volée, le second espace de commande (224b) ferme la troisième lumière (124e) et coopère avec le premier espace de commande (224a) pour permettre une communication de fluide entre les seconde et première lumières (124d, 124c) et le troisième espace de commande (224c) fermant la sixième lumière (124h) et coopérant avec le second espace de commande (224b) pour permettre une communication de fluide entre les quatrième et cinquième lumières (124f, 124g), la première lumière (124c) communiquant avec la quatrième lumière (124f) via un conduit (442) de sorte que la seconde lumière (224d) peut communiquer avec la quatrième lumière (124f) via la première lumière (124c), le conduit (442) et la cinquième lumière (124g) avec la quatrième lumière (124d) et dans le plot (225) comprend un perçage central à l'intérieur duquel le ressort (324) et une extrémité de la bobine (224) sont situés.

**Patentansprüche**

1. Hydraulisches Steuersystem für ein automatisches Getriebe für ein Motorfahrzeug mit einem Motor, der eine Drossel aufweist, welche schrittweise öffnet, wobei das Getriebe zwischen einer Mehrzahl von Vorwärtsgängen schaltbar ist, und wobei das hydraulische Steuersystem folgende Teile aufweist:

eine Fluiddruckquelle;

eine Einrichtung, die mit der Fluiddruckquelle in Verbindung steht, die einen Steuerfluiddruck erzeugt, der entsprechend der Fahrzeuggeschwindigkeit variabel ist;

eine Einrichtung, die mit der Fluiddruckquelle in Verbindung steht, die entsprechend dem Maß der Drosselöffnung variabel ist;

eine Einrichtung zum Erzeugen eines Zurückschalt-Haltesignal-Fluiddruckes;

einen Schaltschieber (24), der eine Einrichtung zur Bildung einer Schieberbohrung, einen Schieber (224), der gleitbeweglich in der Schieberbohrung für eine Bewegung zwischen einer Zurückschaltstellung und einer Heraufschaltstellung beweglich angeordnet ist, und wenigstens eine Druckwirkfläche aufweist, die dem Steuerfluiddruck ausgesetzt ist, einen Stopfen (225), der eine Druckwirkfläche aufweist, die dem Drosselfluiddruck ausgesetzt ist, und eine Feder (324) aufweist, die zwischen dem Schieber (224) und dem Stopfen (225) angeordnet ist und dazwischen wirkt, wobei die Steuerdruckwirkfläche bei Beaufschlagung durch den Steuerdruck den Schieber (224) zu einer Bewegung von der Herunterschaltstellung in die Heraufschaltstellung gegen die Feder veranlaßt, wobei die Drosseldruckwirkfläche bei Beaufschlagung durch den Drosseldruck auf den Stopfen wirkt, um den Schieber (224) von der Heraufschaltstellung in die Herunterschaltstellung zu bewegen;

wobei der Schieber (224) eine erste Signaldruckwirkfläche und der Stopfen (225) eine zweite Signaldruckwirkfläche aufweisen;

wobei die Einrichtung zur Bildung der Schieberbohrung mit einer ersten Gruppe von Öffnungen versehen ist, die eine erste (124c), eine zweite (124d) und eine dritte (124e) Öffnung aufweist, und ferner mit einer zweiten Gruppe von Öffnungen versehen ist, die eine vierte (124f), eine fünfte (124g) und eine sechste (124h) Öffnung umfaßt, wobei der Schieber (224) mit axial beabstandeten ersten (224a), zweiten (224b) und dritten (224c) Steuerflächen versehen ist, die mit der ersten Gruppe von Öffnungen (124c, 124d, 124e) zusammenwirken, um die zweite Öffnung (124d) selektiv mit der ersten oder dritten Öffnung (124c, 124e) zu verbinden, wobei die zweiten und dritten Steuerflächen (224b, 224c) mit der zweiten Gruppe von Öffnungen (124f, 124g, 124h) zusammenwirken, um die fünfte Öffnung (124g) selektiv mit der vierten oder der sechsten Öffnung (124f, 124h) zu verbinden, wobei die Einrichtung zur Bildung der Schieberbohrung mit einer Belastungsöffnung (124b) versehen ist, die sich in die Schieberbohrung öffnet, wobei die Belastungsöffnung eine Verbindung zwischen der Erzeugungseinrichtung (8) für den Haltesignalfluiddruck und der ersten und zweiten Signaldruckwirkfläche schafft, um es zu ermöglichen, daß der Herunterschaltstellungshaltesignalfluiddruck (Kickdown-Druck in Leitung 418) auf die ersten und zweiten Signaldruckwirkflächen wirkt, wobei die erste Signaldruckwirkfläche bei Beaufschlagung mit dem Herunterschaltstellungshaltesignalfluiddruck den Schieber zu einer Bewegung von der Heraufschaltstellung in die Herunterschaltstellung veranlaßt, wobei die zweite Signaldruckwirkfläche bei Beaufschlagung mit dem Herunterschaltstellungshaltesignalfluiddruck den Stopfen beaufschlagt, um sich vom Schieber wegzubewegen, **dadurch gekennzeichnet,**

daß bei der Stellung des Schiebers (224) in der Herunterschaltstellung die erste Steuerfläche (224a) die erste Öffnung (124c) und die zweite Steuerfläche (224b) die vierte Öffnung (124f) schließt, und wobei die ersten und zweiten Steuerflächen (224a, 224b) miteinander zusammenwirken, um eine Fluidverbindung zwischen der zweiten und der dritten Öffnung (124d, 124e) herzustellen, und wobei die dritte Steuerfläche (224c) mit der zweiten Steuerfläche (224b) zusammenwirkt, um eine Fluidverbindung zwischen der fünften und der sechsten Öffnung (124g, 124h) herzustellen, wohingegen

bei Einnahme der der Heraufschaltstellung durch den Schieber (224) die zweite Steuerfläche (224b) die dritte Öffnung (124e) schließt und mit der ersten Steuerfläche (224a) zusammenwirkt, um eine Fluidverbindung zwischen der zweiten und der ersten Öffnung (124d, 124c) herzustellen, und wobei die dritte Steuerfläche (224c) die sechste Öffnung (124h) schließt und mit der zweiten Steuerfläche (224b) zusammenwirkt, um eine Fluidverbindung zwischen der vierten und der fünften Öffnung (124f, 124g) herzustellen, wobei die erste Öffnung (124c) mit der vierten Öffnung (124f) über eine Leitung (442) in Verbindung steht, so daß die zweite Öffnung (124d) mit der vierten Öffnung (124f) über die erste Öffnung (124c), die Leitung (442) und die fünfte Öffnung (124g) mit der vierten Öffnung (124f) in Verbindung stehen kann, und daß der Stopfen (225) eine mittige Ausnehmung aufweist, innerhalb der die Feder (324) und ein Ende des Schiebers (224) angeordnet sind.

# FIG.1

EP 0 305 595 B1

FIG.2(a)

10

FIG.2(b)

FIG.2(c)

# FIG.3